# EUROPEAN PATENT SPECIFICATION

(11) **EP 3 930 936 B1**
(45) Date of publication and mention of the grant of the patent: **20.12.2023**
(21) Application number: 20713986.6
(22) Date of filing: 25.02.2020
(51) Int. Cl.: B21C 51/00, B21F 1/02, G01B 7/28, B21D 3/05

(54) **METHOD AND APPARATUS FOR DETECTING THE CURVATURE OF ELONGATED METAL ELEMENTS**
VERFAHREN UND VORRICHTUNG ZUR ERKENNUNG DER KRÜMMUNG VON LÄNGLICHEN METALLELEMENTEN
PROCÉDÉ ET APPAREIL DE DÉTECTION DE LA COURBURE D'ÉLÉMENTS MÉTALLIQUES ALLONGÉS

(30) Priority: 25.02.2019 IT 201900002711
(43) Date of publication of application: 05.01.2022
(73) Proprietor: Schnell S.p.A., 61036 Colli al Metauro (PU) (IT)
(72) Inventor: RUPOLI, Simone, 61036 Colli al Metauro (PU) (IT)
(74) Representative: Manzella & Associati
(86) International application number: PCT/IT2020/050039
(87) International publication number: WO 2020/174507

(56) References cited:
- WO-A1-2017/183010
- DE-A1- 19 750 816
- JP-A- H05 337 582
- JP-U- S5 973 090

## Description

### Technical field

The present invention relates to a method and apparatus for detecting the curvature of elongated metal elements, in particular metal profiles and rods for reinforced concrete and similar products, in particular subjected to a straightening process.

### Background of the invention

Apparatuses for processing elongated metal elements, in particular metal profiles and similar products, which include straightening units are known.

In particular, these units are used to straighten rods wound in rolls which, once unwound and straightened, may still have a more or less accentuated residual curvature, unsuitable for subsequent processing or for direct use on site.

Said apparatuses may comprise, for example, straightening units made by means of a plurality of pairs of counter-rotating wheels, staggered along the feeding line, through which the rod is fed, so that each section of the metal element in transit is subjected to cyclical actions of yielding by bending, aimed at eliminating the original curvature.

US 1,239,175 shows, for example, an apparatus for straightening metal wires, comprising a first set of counter-rotating wheels and a second set of counter-rotating wheels, arranged on mutually orthogonal planes.

Apparatus which are provided with devices for measuring the residual curvature of the elongated metal elements, in particular subjected to a straightening process are also known.

For example, the application WO2017/183010 shows a detecting assembly associated with a drawing and/or straightening assembly, comprising at least a first sensor element arranged on a first detection plane, a second sensor element arranged on a second detection plane, capable of detecting at least a first datum and a second datum respectively, each indicating the instantaneous value of a respective distance from a section of the elongated metal element when it crosses the first detection plane and the second detection plane respectively, and a device for acquiring and processing said first data and said second data. An acquisition and processing device is configured to process said first data and said second data, to estimate an instantaneous geometric configuration assumed by the metal element in a space defined between the first detection plane and the second detection plane, to identify a possible anomaly with respect to a desired geometric configuration for the metal element.

DE 19750816, forming the basis for the preamble of claim 6, illustrates a machine for straightening and detecting the curvature of metal elements.

Patent application JP H05337582 illustrates a straightening apparatus for elongated elements comprising a curvature detection device.

Patent application JP S5973090 describes an apparatus for detecting the orientation of a metal wire.

The patent application WO 2017/183010 shows a method and an apparatus for the automatic correction of the curvature of elongated metal elements.

Known devices, however, do not enable effective measurement of any residual curvatures of the metal element, as it is difficult to obtain reliable measurements on the moving element which is often subjected to considerable oscillations, due to the absence of constraints on the work surface area. Furthermore, the irregular shape of the metal element being formed may also make a reliable measurement difficult to take.

### Disclosure

The object of the present invention is to solve the mentioned problems, by devising a method and an apparatus for detecting the curvature of elongated metal elements, which enables reliable measurements of the curvature of these elements to be to obtained, in particular of elements subjected to a straightening process.

Another object of the present invention is to provide an apparatus for detecting the curvature of elongated metal elements, of simple construction and functional conception, having safe and reliable use, as well as relatively inexpensive cost.

Said objects are achieved, according to the present invention, by the detection method according to claim 1, as well as by the curvature detection apparatus according to claim 6.

According to the invention, the detection method provides for arranging a straightener assembly for an element along a feeding line, an assembly for detecting the residual curvature or the degree of straightness of the element downstream of the straightener assembly and a cutting assembly downstream of the detecting assembly, for feeding the element along the feeding line, for detecting by the detecting assembly at least a datum relating to the instantaneous position of at least a portion of the element passing through at least one detection plane along the feeding line. The at least one datum is transmitted to a processing unit, so as to process the residual curvature or the degree of straightness of the fed element.

The method provides for arranging at least one guide assembly along the feeding line upstream and/or downstream of the detecting assembly, configured to guide the element along said feeding line by tightening, and removing any deformations and/or deviations made on the element by the straightener assembly.

In particular, the guide assembly is interposed between the straightener assembly and the detecting assembly.

The method and the apparatus that implements it enable to detect the curvature and/or the degree of straightness of the straightened element during a feeding step inside the processing apparatus, in particular upstream of the cutting unit. In this way, the impact on the detection of vibrations or deformations due to the weight of the material itself is reduced since the detection is carried out where the guiding effect of the members of the feeding line is present.

Preferably, the method therefore provides for guiding the element by means of at least one guiding assembly, tightening it, therefore limiting it in particular on the feeding line, upstream of the detecting assembly, in order to remove any deformations made by the last straightening members or by any correcting members that are arranged immediately upstream of the detecting assembly.

The apparatus for detecting the curvature of elongated metal elements, according to the invention, comprises a detecting assembly arranged along a feeding line according to a feeding direction of a metal element, downstream of a straightener assembly and upstream of a cutting unit. The detecting assembly comprises at least one sensor device arranged around the feeding line along the feeding direction, and is configured to detect at least one datum relative to the instantaneous position of at least a portion of the element passing through at least one detection plane transversal to the feeding direction along the feeding line, to detect the curvature and/or, equivalently, the degree of straightness of the metal element fed inside the guide body along the feeding direction.

The apparatus comprises at least one guide assembly arranged upstream and/or downstream of the detection assembly, to guide by tightening the element fed along the feeding line in the feeding direction, thus removing deformations and/or deviations made on the element by straightening or correcting members, so as to detect the curvature and/or, in an equivalent way, the degree of straightness of the metal element fed along the feeding direction by means of the detecting assembly.

The guide assembly is preferably interposed between the straightener assembly and the detecting assembly.

According to the invention, the guide assembly is made by means of at least one sleeve or a pair of overlapping wheels, on opposite sides with respect to the feeding line, to guide and limit at the same time the fed element, so as to remove, i.e. filter, the effect of any deformations made by the upstream members.

In particular, the wheels of the guide assembly are preferably idle, therefore they enable the feeding, therefore the guide, of the element along the feeding line, while exercising said function of limiting along the feeding line, therefore certain positioning, and filtering.

The combination of the guide assembly and the detecting assembly, along the feeding line, upstream of the cutting assembly, arranged at the same feeding line, advantageously enables the curvature and/or the degree of straightness of the straightened element to be determined in a certain and reliable way.

The cutting assembly and the guiding assembly, in particular, are limits arranged on the same feeding line for the straightened element, while the detecting assembly enables possible deviations from the straightness between the two limits to be measured.

Preferably, the method and the apparatus provide for arranging a further guiding assembly upstream of the cutting assembly and downstream of the detecting assembly, in order to optimize this effect of eliminating deformations caused by the straightening or correcting members.

Preferably, the further guide assembly is interposed between said detecting assembly and the cutting assembly.

Preferably, the method provides for creating a flow of fluid, preferably of air, inside the detecting assembly, to eliminate any dust that may disturb the detection.

Preferably the detecting assembly provides a guide body, for example tubular one, around which at least one sensor device is arranged, for the detection of at least one datum relative to the instantaneous position of a portion of the element fed through said detecting assembly.

Preferably the guide body comprises one or more passage conduits for a fluid, for example compressed and/or sucked air, to remove disturbing materials possibly present inside.

Preferably said flow of fluid takes place in the guide body in a direction opposite to the direction of feeding the element along the feeding line.

### Description of drawings

The details of the invention will become more evident from the detailed description of a preferred embodiment of the apparatus for detecting the curvature of elongated metal elements, illustrated only by way of non-limitative example in the accompanying drawings, where:
Figures 1 and 2 show respectively a side view of the detecting apparatus according to the invention, in different operating conditions, used in a plant for processing elongated metal elements;
Figures 3 and 4 respectively show a side and section view according to a median longitudinal plane of a detecting assembly used in the detecting apparatus according to the invention;
Figures 5 and 6 show respectively a front and sectional view according to a transverse plane of a portion of the detecting assembly shown in Figures 3 and 4;
Figures 7 and 8 show respectively a side view of a further embodiment of the detection apparatus, in different operating conditions.

### Best mode

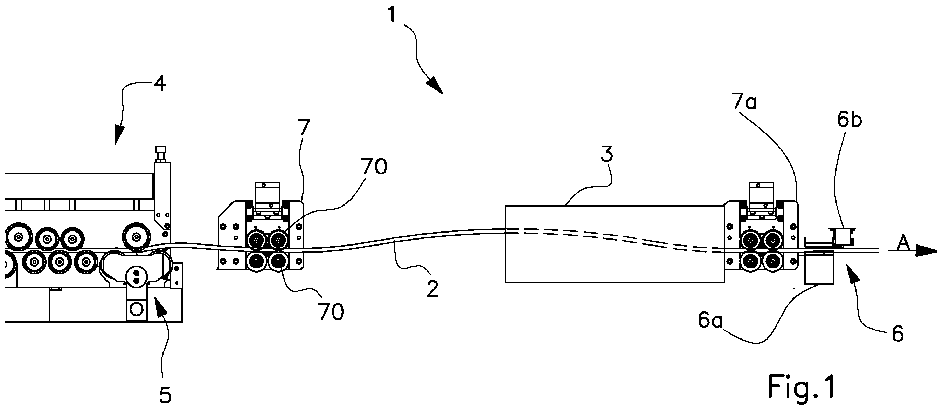

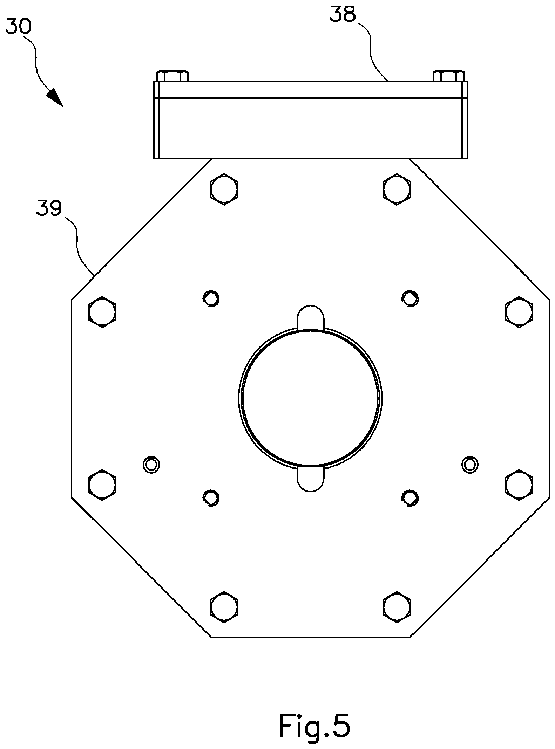

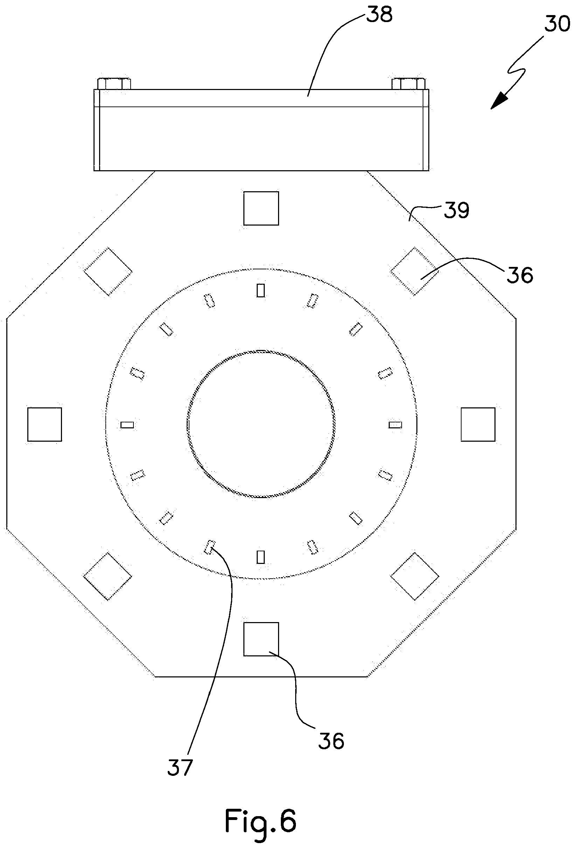

With particular reference to Figures 1 to 6, the reference numeral 1 indicates as a whole an apparatus for detecting the curvature of elongated metal elements 2, in particular metal rods and profiles.

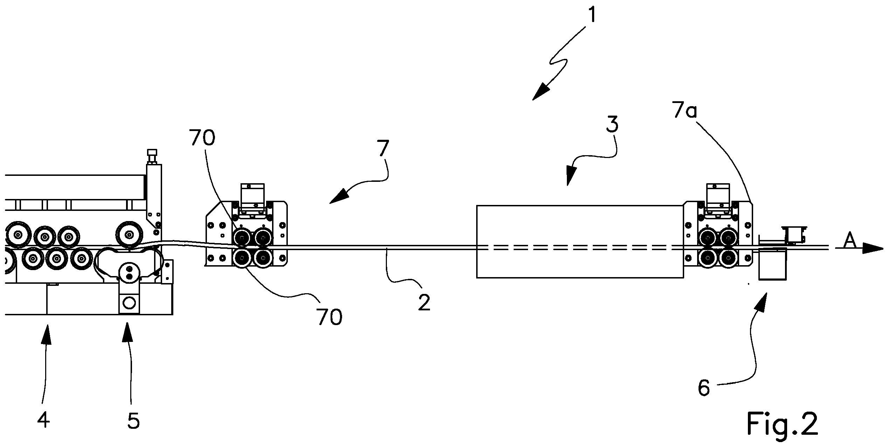

The apparatus 1 comprises an assembly 3 for detecting the curvature of the metal elements 2 or, equivalently, the degree of straightness of the same elements 2, following for example a straightening process operated by a straightener assembly 4 arranged upstream of the detecting assembly 3 (see Figures 1 and 2).

The apparatus 1 may be used in a plant for processing the metal elements 2, and also comprise, in a known way, a straightening correcting assembly 5 arranged downstream of said straightener assembly 4. The correcting assembly 5 is configured to correct, at least on a certain correction plane, for example vertical, the straightening of the element 2 fed along a feeding line in a feeding direction A.

Both the straightener assembly 4 and the correcting assembly 5 may be of any type, for example with rollers, rotors, hyperbolic rotors, provided they are suitable for the purpose.

The apparatus 1 may further comprise a cutting assembly 6, for example a shears, for cutting the element 2 fed along the feeding direction A.

In the embodiment illustrated by way of example in Figure 1, the cutting assembly 6 is made by means of a fixed part 6a, also shaped to guide the element 2 and having a fixed blade, and a moving part 6b, having a movable blade.

The apparatus 1 comprises in a known way at least one drawing assembly, of any type, for simplicity not shown in the figures, for example with wheels, clamp, track.

The detecting device 3 is advantageously arranged downstream of the straightener assembly 4 and, preferably, if present, of the correcting assembly 5.

The detecting device 3 is preferably interposed between the straightener assembly 4 and the cutting assembly 6.

It comprises at least one sensor device 30, preferably a plurality of sensor devices 30 arranged in succession along the detecting assembly 3 in the feeding direction A.

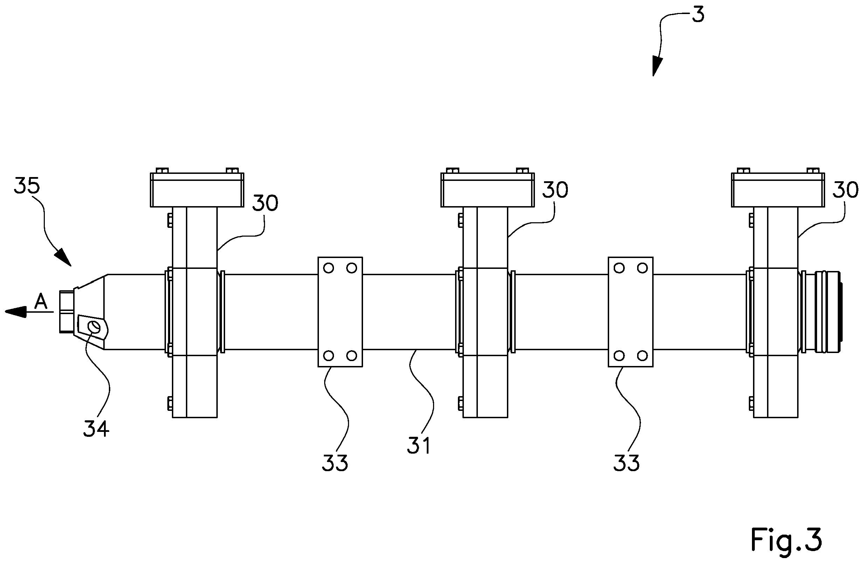

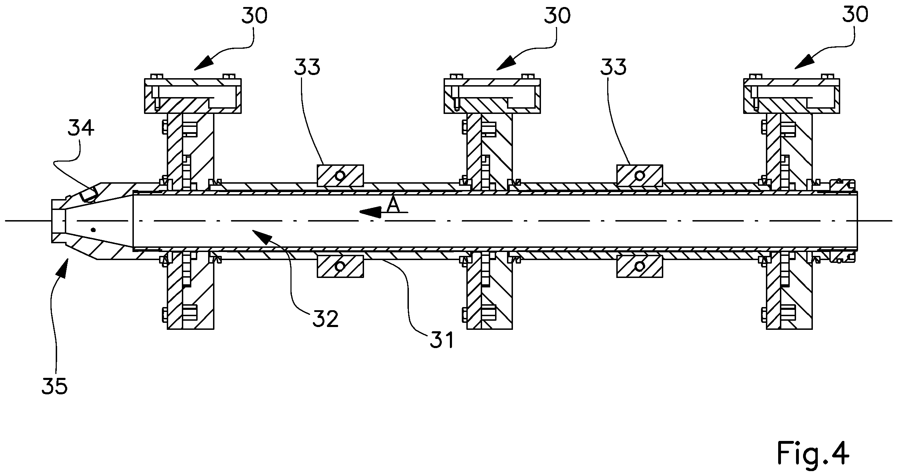

For example, in the embodiment shown in Figures 3 and 4, there are three sensor devices 30. However, different configurations with a different number of detecting devices 30 may alternatively be provided.

The detecting assembly 3 may also preferably comprise a guide body 31 of the metal element 2, preferably made by means of a tubular body, internally defining a passage channel 32 for the elongated metal elements 2, fed along the feeding direction A.

The aforementioned guide body 31 may be made in a different way, so that the detecting assembly 3 has, for example, a flat, curved, parabolic, hyperbolic, or circular sector shape, in cross section, being made in one or more parts.

The guide body 31 may, for example, be made of a tubular member or a pair of half-shells joined by respective closing and/or fixing members 33, for example of the flange type.

The guide body 31 preferably comprises at least a feeding conduit 34 for a flow of air, for example compressed, for the removal of the calamine dispersed in the processing environment and possibly dragged by the elements 2 during feeding.

The conduit 34 may preferably be arranged at a side wall of the outlet portion 35, preferably with a conical shape, of the guide body 31.

Preferably, the guide body 31 may provide a plurality of conduits 34, for example distributed angularly at said outlet portion 35 (see Figure 3).

The sensor devices 30 of the detecting assembly 3 are preferably arranged around the feeding direction A, to optimally detect the degree of straightness and/or the residual curvature of the element 2.

More precisely, each sensor 30 is configured to detect in a respective detection plane, transverse to the feeding direction, the instantaneous position of a respective portion of an element 2 passing through it. This instantaneous position may be processed by a processing unit of the apparatus 1 to determine the residual curvature and/or the degree of straightness of the element 2, as described in more detail below.

For example, the sensor devices 30 are preferably arranged around the aforementioned guide body 31, so that each one may detect, in the corresponding detection plane, the position of a respective portion of an element 2 passing through the passage channel 32.

Each sensor device 30 is preferably of the magnetoresistive type, for example of the type illustrated in EP3209973 in the name of the Applicant.

For example, each sensor device 30 comprises at least one source body 36, for example a magnet, suitable for generating a magnetic field. Preferably each sensor device 30 comprises a plurality of source bodies 36 preferably angularly arranged on the respective transverse detection plane, around the feeding direction A or, more precisely, around the feeding line in the feeding direction A.

The detection device 30 also includes sensitive elements 37, associated, preferably in pairs, to each source body 36, and arranged within the magnetic field generated by them.

The sensitive elements 37 are intended to emit electrical signals indicative of a local variation of the direction of the generated magnetic field, when the same magnetic field is crossed by a ferromagnetic body, in particular by element 2.

The signals emitted by the sensitive elements 37 are acquired by the processing unit of the apparatus 1, not shown for simplicity, to provide a measurement of the instantaneous position of a section of the element 2 passing through said detection plane.

The sensor device 30 also comprises an electrical circuit, for simplicity not shown, suitable for transmitting these signals, to enable said processing. In particular, the electrical circuit may flow into a containment box 38 which forms a portion of the containment body 39 of the sensor device 30.

For example, the containment body 39 may have an octagonal or different shape, provided it is suitable for the purpose.

Also, the apparatus may usefully comprise at least one guide assembly 7 arranged upstream of the detecting assembly 3, to guide the element 2 along the feeding direction A, thus filtering, therefore removing deformations of the element 2 made by correction elements or by straightening members arranged upstream of the detecting assembly 3, and allowing the detection of only possible residual curvature or the degree of straightness, typical of the element 2.

The guide assembly 7 is advantageously arranged downstream of the straightener assembly 4, to perform said filtering or limiting function.

The guide assembly 7 may be made, for example, by means of a guide sleeve or by means of one or, equivalently, several pairs of opposite wheels 70, preferably idle, but capable of tightening the element 2, as illustrated in Figure 1, in order to guide it effectively.

In this way, the onset of vibrations which may disturb the detection of the curvature typical of the element 2, by means of the detecting assembly 3, is greatly reduced.

Preferably, the apparatus may comprise a further guide assembly 7a, arranged downstream of the detecting assembly 3, so as to represent a further guiding limit to the metal element 2, such as to allow an arrangement thereof, detectable by means of the sensor devices 30, substantially representative of the curvature of the element 2.

In practice, each of the guide assemblies 7, 7a performs the function of eliminating deformations caused by wheels of the straightening or correcting members, as well as by the weight of the element 2 and/or by vibrations to which the element 2 is subjected during the movement step.

The method according to the invention, as well as the operation of the detection apparatus according to the invention, are easy to understand from the above description.

The element 2 is fed along the feeding direction A, preferably through the straightener assembly 4 and subsequently the correcting assembly 5, which possibly corrects, at least on a respective plane, the straightening action to which the element 2 is been subjected.

The element 2 is then led through the guide assembly 7 which, in the illustrated embodiment, may eliminate the effect of the deviation produced by the correction members, in particular consequent to the regulation made by the correcting assembly 5.

Downstream of the guide assembly 7, the element 2 arrives inside the detecting assembly 3, in particular inside the guide body 31.

Preferably the element 2 is guided through the further guide assembly 7a, arranged downstream of the detecting assembly 3, so as to ensure that between said guide assemblies 7, 7a the element 2 is arranged according only to its own residual deformation of the material, thus isolating the involved section by everything that may induce measurement errors upstream and downstream by the detecting assembly 3.

When crossing the passage channel 32 formed in the guide body 31, the sensor devices 30 preferably continuously detect, in the respective detection planes, the instantaneous position of respective portions of the element 2.

The processing unit of the apparatus 1 therefore receives, from the respective sensitive elements 37 of the individual sensor devices 30, a succession of signals which allow processing of the configuration of the element 2 and, therefore, the relative degree of straightness or curvature, useful to correct, if necessary, the straightening operations carried out by the respective straightening and/or correcting assemblies arranged upstream of the detecting assembly 3.

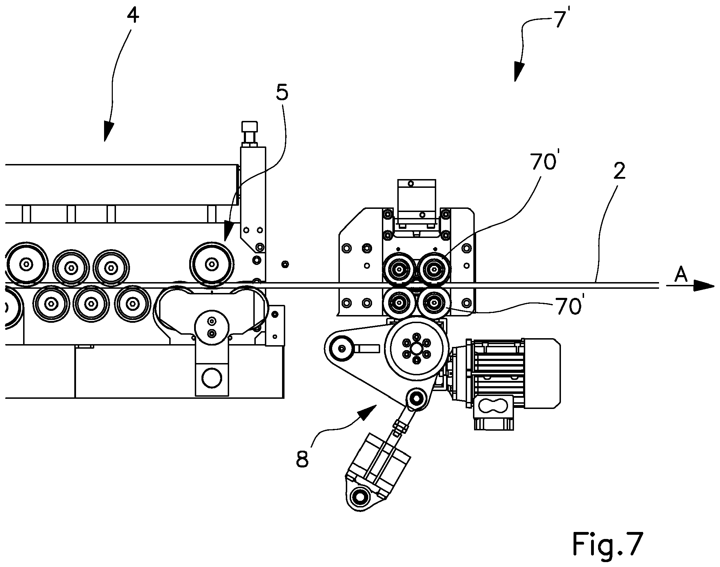

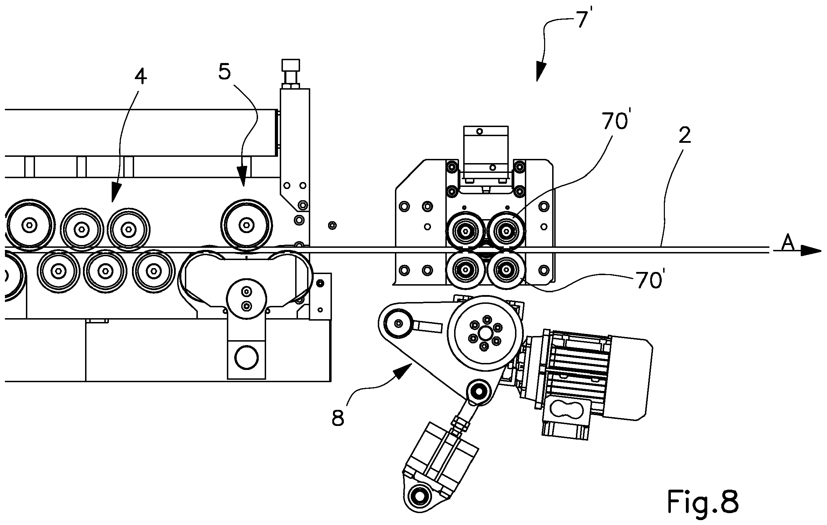

According to a further embodiment, illustrated in Figures 7 and 8, the guiding device 7', made up of pairs of opposite wheels 70', can be operated alternately between a guiding configuration (see Figure 7), for tightening, and an inactive configuration, releasing the element 2 (see Figure 8), by means of an operator device 8 acting, for example, on one side with respect to the feeding line along the feeding direction A, on the respective wheels, to bring them closer or move them away from the opposite wheels 70'.

The detection apparatus 1 described by way of example may be modified according to the different needs.

In the practical embodiment of the invention, the materials used, as well as the shape and the dimensions, may be modified depending on requirements.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. Method for detecting the curvature of elongated metal elements, comprising the steps of
a. providing a straightening assembly (4) along a feeding line in a feeding direction (A) for said element (2), a detection assembly (3) of the residual curvature or of the straightness degree of said element (2) downstream of said straightening assembly (4) and a cutting assembly (6) downstream of said detection assembly (3);
b. feeding said element (2) along said feeding line, through at least one guiding assembly (7, 7') and said detection assembly (3); said at least one guiding assembly (7, 7') being arranged along said feeding line upstream and/or downstream of said detection assembly (3), said at least one guiding assembly (7, 7') being made by means of at least one sleeve or a pair of overlapping wheels, on opposite sides with respect to the feeding line, to guide and limit at the same time the element (2);
c. guiding by tightening said element (2) along said feeding line by means of said at least one guiding assembly (7, 7'), thereby removing any deformations and/or deviations imposed on said element (2) by said straightening assembly (4);
d. detecting by means of said detection assembly (3) at least one datum concerning instantaneous position of at least a portion of said element (2) when passing through at least one detection plane transversal to said feeding direction (A) along said feeding line;
e. sending said at least one datum to a processing unit so as to process said residual curvature or said degree of straightness of said element (2).

2. Method according to claim 1, **characterized in that** it comprises the further step of tightening said element (2) along said feeding line by means of a further guiding assembly (7a) arranged downstream of said detection assembly (3), for guiding by tightening or limiting said element (2) along said feeding line (A), said guiding assembly (7) being arranged upstream of said detection assembly (3).

3. Method according to any one of the preceding claims, **characterized in that** said step of d. detecting provides for feeding said element (2) through at least one sensor device (30) for detecting said at least one datum.

4. Method according to any one of the preceding claims, **characterized in that** said step of d. detecting provides for feeding said element (2) along a passage channel (32) along said feeding line around which at least one sensor device (3) is arranged for detecting said at least one datum.

5. Method according to any one of the preceding claims, **characterized in that** it comprises the further step of feeding a flow of fluid into said detection assembly (3) through at least one duct (34), so as to remove any dust from the element (2) or other materials that may disturb the detection.

6. Apparatus for detecting the curvature of elongated metal elements, comprising a detection assembly (3) arranged, in use, along a feeding line according to a feeding direction (A) of a said metal element (2), downstream of a straightening assembly (4) and upstream of a cutting assembly (6), said detection assembly (3) being configured for detecting the curvature and/or, equivalently, the degree of straightness of said metal element (2) fed along said feeding direction (A) and comprising at least one sensor device (30) arranged around said feeding line along said feeding direction (A), and being configured for detecting at least one datum concerning instantaneous position of at least a portion of said element (2) when passing through at least one detection plane transversal to said feeding direction (A) along said feeding line, **characterized in that** it comprises a guiding assembly (7, 7') arranged upstream and/or downstream of said detection assembly (3), for guiding by tightening said element (2) along said feeding line, thus removing deformations and/or deviations imposed on said element (2) by straightening or correcting assemblies, said at least one guiding assembly (7, 7') being made by means of at least one sleeve or a pair of overlapping wheels, on opposite sides with respect to the feeding line, to guide and limit at the same time the element (2).

7. Apparatus according to claim 6, **characterized in that** it comprises said straightening assembly (4), said guiding assembly (7) being interposed between said straightening assembly (4) and said detecting assembly (3).

8. Apparatus according to claim 6 or 7, **characterized in that** said detection assembly (3) comprises a guide body (31) internally defining a passage channel (32) for at least one said metal element (2).

9. Apparatus according to claim 8, **characterized in that** said guide body (31) comprises at least one supply duct (34) for a flow of a fluid inside said guide body (31), so as to remove any disturbing materials or dust present inside.

10. Apparatus according to any one of claims from 6 to 9, **characterized in that** it comprises a further guiding assembly (7a) arranged downstream of said detection assembly (3), for guiding in a corresponding further portion, by tightening, said element (2) fed along said feeding line in said feeding direction (A), thus removing deformations and/or deviations imposed on said element (2) by straightening or correcting assemblies, said guiding assembly (7) being arranged upstream of said detecting unit (3).

11. Apparatus according to claim 10, **characterized in that** it comprises said cutting assembly (6), said further guiding assembly (7') being interposed between said detecting assembly (3) and said cutting assembly (6).

12. Apparatus according to any one of the claims from 6 to 11, **characterized in that** said detection assembly (3) comprises at least one sensor device (30) of the magnetoresistive type.

13. Apparatus according to any one of the claims from 6 to 12, **characterized in that** said detection assembly (3) comprises a plurality of said sensor devices (30) arranged in succession along said feeding line according to said feeding direction (A).

## Patentansprüche

1. Verfahren zum Erfassen der Krümmung länglicher Metallelemente, das die folgenden Schritte umfasst:
a. Bereitstellen einer Richtbaugruppe (4) entlang einer Zuführlinie in einer Zuführrichtung (A) für das Element (2), einer Erfassungsbaugruppe (3) der Restkrümmung oder des Geradheitsgrades des Elements (2) stromabwärts der Richtbaugruppe (4) und einer Schneidbaugruppe (6) stromabwärts der Erfassungsbaugruppe (3);
b. Zuführen des Elements (2) entlang der Zuführleitung durch mindestens eine Führungsbaugruppe (7, 7') und die Erfassungsbaugruppe (3); wobei die mindestens eine Führungsbaugruppe (7, 7') entlang der Zuführleitung stromaufwärts und/oder stromabwärts der Erfassungsbaugruppe (3) eingerichtet ist, wobei die mindestens eine Führungsbaugruppe (7, 7') mittels mindestens einer Hülse oder eines Paars überlappender Räder auf entgegengesetzten Seiten in Bezug auf die Zuführleitung hergestellt ist, um das Element (2) gleichzeitig zu führen und zu begrenzen;
c. Führen durch Festziehen des Elements (2) entlang der Zuführleitung mittels der mindestens einen Führungsbaugruppe (7, 7'), wodurch Verformungen und/oder Abweichungen, die dem Element (2) von der Richtbaugruppe (4) auferlegt werden, entfernt werden;
d. Erfassen mittels der Erfassungsbaugruppe (3) mindestens eines Datums, das die momentane Position mindestens eines Abschnitts des Elements (2) beim Durchgehen durch mindestens eine Erfassungsebene quer zu der Zuführrichtung (A) entlang der Zuführlinie betrifft;
e. Senden des mindestens einen Datums an eine Verarbeitungseinheit, um die Restkrümmung oder den Geradheitsgrad des Elements (2) zu verarbeiten.

2. Verfahren nach Anspruch 1, **dadurch gekennzeichnet, dass** es den weiteren Schritt des Festziehens des Elements (2) entlang der Zuführleitung mittels einer weiteren Führungsbaugruppe (7a) umfasst, die stromabwärts der Erfassungsbaugruppe (3) eingerichtet ist, um das Element (2) durch Festziehen oder Begrenzen entlang der Zuführleitung (A) zu führen, wobei die Führungsbaugruppe (7) stromaufwärts der Erfassungsbaugruppe (3) eingerichtet ist.

3. Verfahren nach einem der vorstehenden Ansprüche, **dadurch gekennzeichnet, dass** der Schritt d. des Erfassens das Zuführen des Elements (2) durch mindestens eine Sensorvorrichtung (30) zum Erfassen des mindestens einen Datums bereitstellt.

4. Verfahren nach einem der vorstehenden Ansprüche, **dadurch gekennzeichnet, dass** der Schritt des d. Erfassens das Zuführen des Elements (2) entlang eines Durchgangskanals (32) entlang der Zuführleitung, um die mindestens eine Sensorvorrichtung (3) zum Erfassen des mindestens einen Datums eingerichtet ist, bereitstellt.

5. Verfahren nach einem der vorstehenden Ansprüche, **dadurch gekennzeichnet, dass** es den weiteren Schritt des Zuführens eines Fluidstroms in die Erfassungsbaugruppe (3) durch mindestens einen Kanal (34) umfasst, um jeglichen Staub von dem Element (2) oder andere Materialien, die die Erfassung stören können, zu entfernen.

6. Gerät zum Erfassen der Krümmung langgestreckter Metallelemente, das eine Erfassungsbaugruppe (3) umfasst, die bei Verwendung der Zuführlinie gemäß einer Zuführrichtung (A) des Metallelements (2) stromabwärts einer Richtbaugruppe (4) und stromaufwärts einer Schneidbaugruppe (6) eingerichtet ist, wobei die Erfassungsbaugruppe (3) zum Erfassen der Krümmung und/oder gleichwertig des Geradheitsgrades des entlang der Zuführrichtung (A) zugeführten Metallelements (2) konfiguriert ist und mindestens eine Sensoreinrichtung (30) entlang der Zuführrichtung (A) umfasst, die um die Zuführlinie eingerichtet ist und dazu konfiguriert ist, mindestens ein Datum, das eine momentane Position mindestens eines Teils des Elements (2) betrifft, beim Durchqueren durch mindestens eine Erfassungsebene quer zu der Zuführrichtung (A) entlang der Zuführlinie zu erfassen, **dadurch gekennzeichnet, dass** sie eine Führungsbaugruppe (7, 7') umfasst, die stromaufwärts und/oder stromabwärts der Erfassungsbaugruppe (3) eingerichtet ist, um das Element (2) durch Festziehen entlang der Zuführlinie zu führen und so Verformungen und/oder Abweichungen, die dem Element (2) auferlegt werden, durch Richten oder Korrigieren von Baugruppen zu entfernen, wobei die mindestens eine Führungsbaugruppe (7, 7') mittels mindestens einer Hülse oder eines Paars überlappender Räder auf entgegengesetzten Seiten in Bezug auf die Zuführleitung hergestellt ist, um das Element (2) gleichzeitig zu führen und zu begrenzen.

7. Gerät nach Anspruch 6, **dadurch gekennzeichnet, dass** es die Richtbaugruppe (4) umfasst, wobei die Führungsbaugruppe (7) zwischen der Richtbaugruppe (4) und der Erfassungsbaugruppe (3) zwischengefügt ist.

8. Gerät nach Anspruch 6 oder 7, **dadurch gekennzeichnet, dass** die Erfassungsbaugruppe (3) einen Führungskörper (31) umfasst, der innen einen Durchgangskanal (32) für das mindestens eine Metallelement (2) definiert.

9. Gerät nach Anspruch 8, **dadurch gekennzeichnet, dass** der Führungskörper (31) mindestens einen Versorgungskanal (34) für einen Strom eines Fluids innerhalb des Führungskörpers (31) umfasst, um darin vorhandene störende Materialien oder Staub zu entfernen.

10. Gerät nach einem der Ansprüche 6 bis 9, **dadurch gekennzeichnet, dass** es eine weitere Führungsbaugruppe (7a) umfasst, die stromabwärts der Erfassungsbaugruppe (3) eingerichtet ist, um das entlang der Zuführlinie in der Zuführrichtung (A) zugeführte Element (2) durch Festziehen in einem entsprechenden weiteren Abschnitt zu führen, wodurch Verformungen und/oder Abweichungen beseitigt werden, die dem Element (2) durch Richt- oder Korrekturbaugruppen auferlegt werden, wobei die Führungsbaugruppe (7) stromaufwärts der Erfassungseinheit (3) eingerichtet ist.

11. Gerät nach Anspruch 10, **dadurch gekennzeichnet, dass** es die Schneidbaugruppe (6) umfasst, wobei die weitere Führungsbaugruppe (7') zwischen der Erfassungsbaugruppe (3) und der Schneidbaugruppe (6) eingefügt ist.

12. Gerät nach einem der Ansprüche 6 bis 11, **dadurch gekennzeichnet, dass** die Erfassungsbaugruppe (3) mindestens eine Sensorvorrichtung (30) vom magnetoresistiven Typ umfasst.

13. Gerät nach einem der Ansprüche 6 bis 12, **dadurch gekennzeichnet, dass** die Erfassungsbaugruppe (3) eine Vielzahl von Sensorvorrichtungen (30) umfasst, die entlang der Zuführlinie gemäß der Zuführrichtung (A) nacheinander eingerichtet sind.

## Revendications

1. Procédé de détection de la courbure d'éléments métalliques allongés, comprenant les étapes consistant à:
a. fournir un ensemble de redressement (4) le long d'une ligne d'alimentation dans une direction d'alimentation (A) pour ledit élément (2), un ensemble de détection (3) de la courbure résiduelle ou du degré de rectitude dudit élément (2) en aval dudit ensemble de redressement (4) et un ensemble de coupe (6) en aval dudit ensemble de détection (3);
b. acheminer ledit élément (2) le long de ladite ligne d'alimentation, à travers au moins un ensemble de guidage (7, 7') et ledit ensemble de détection (3) ; ledit au moins un ensemble de guidage (7, 7') étant agencé le long de ladite ligne d'alimentation en amont et/ou en aval dudit ensemble de détection (3), ledit au moins un ensemble de guidage (7, 7') étant réalisé au moyen d'au moins un manchon ou d'une paire de roues se chevauchant, sur des côtés opposés par rapport à la ligne d'alimentation, pour guider et limiter l'élément (2) en même temps;
c. guider ledit élément (2) par serrage le long de ladite ligne d'alimentation au moyen dudit au moins un ensemble de guidage (7, 7'), éliminant ainsi toute déformation et/ou déviation imposée audit élément (2) par ledit ensemble de redressement (4);
d. détecter au moyen dudit ensemble de détection (3) au moins une donnée concernant une position instantanée d'au moins une partie dudit élément (2) lorsqu'il passe à travers au moins un plan de détection transversal à ladite direction d'alimentation (A) le long de ladite ligne d'alimentation;
e. envoyer ladite au moins une donnée à une unité de traitement de manière à traiter ladite courbure résiduelle ou ledit degré de rectitude dudit élément (2).

2. Procédé selon la revendication 1, **caractérisé en ce qu'**il comprend l'étape supplémentaire consistant à serrer ledit élément (2) le long de ladite ligne d'alimentation au moyen d'un autre ensemble de guidage (7a) agencé en aval dudit ensemble de détection (3), pour guider ledit élément (2) par serrage ou limitation le long de ladite ligne d'alimentation (A), ledit ensemble de guidage (7) étant agencé en amont dudit ensemble de détection (3).

3. Procédé selon l'une quelconque des revendications précédentes, **caractérisé en ce que** ladite étape de détection d. prévoit l'acheminement dudit élément (2) à travers au moins un dispositif de capteur (30) pour détecter ladite au moins une donnée.

4. Procédé selon l'une quelconque des revendications précédentes, **caractérisé en ce que** ladite étape de détection d. prévoit l'acheminement dudit élément (2) le long d'un canal de passage (32) le long de ladite ligne d'alimentation autour de laquelle au moins un dispositif de capteur (3) est agencé pour détecter ladite au moins une donnée.

5. Procédé selon l'une quelconque des revendications précédentes, **caractérisé en ce qu'**il comprend l'étape supplémentaire d'acheminement d'un écoulement de fluide dans ledit ensemble de détection (3) à travers au moins un conduit (34), de manière à éliminer toute poussière de l'élément (2) ou d'autres matières qui peuvent perturber la détection.

6. Appareil de détection de la courbure d'éléments métalliques allongés, comprenant un ensemble de détection (3) agencé, en utilisation, le long d'une ligne d'alimentation selon une direction d'alimentation (A) d'un dit élément (2) métallique, en aval d'un ensemble de redressement (4) et en amont d'un ensemble de coupe (6), ledit ensemble de détection (3) étant configuré pour détecter la courbure et/ou, de manière équivalente, le degré de rectitude dudit élément (2) métallique acheminé le long de ladite direction d'alimentation (A) et comprenant au moins un dispositif de capteur (30) agencé autour de ladite ligne d'alimentation le long de ladite direction d'alimentation (A), et étant configuré pour détecter au moins une donnée concernant une position instantanée d'au moins une partie dudit élément (2) lorsqu'il passe à travers au moins un plan de détection transversal à ladite direction d'alimentation (A) le long de ladite ligne d'alimentation, **caractérisé en ce qu'**il comprend un ensemble de guidage (7, 7') agencé en amont et/ou en aval dudit ensemble de détection (3), pour guider ledit élément (2) par serrage le long de ladite ligne d'alimentation éliminant ainsi les déformations et/ou déviations imposées audit élément (2) par des ensembles de redressement ou de correction, ledit au moins un ensemble de guidage (7, 7') étant réalisé au moyen d'au moins un manchon ou d'une paire de roues se chevauchant, sur des côtés opposés par rapport à la ligne d'alimentation, pour guider et limiter l'élément (2) en même temps.

7. Appareil selon la revendication 6, **caractérisé en ce qu'**il comprend ledit ensemble de redressement (4), ledit ensemble de guidage (7) étant interposé entre ledit ensemble de redressement (4) et ledit ensemble de détection (3).

8. Appareil selon la revendication 6 ou 7, **caractérisé en ce que** ledit ensemble de détection (3) comprend un corps de guidage (31) définissant intérieurement un canal de passage (32) pour au moins un dit élément (2) métallique.

9. Appareil selon la revendication 8, **caractérisé en ce que** ledit corps de guidage (31) comprend au moins un conduit d'alimentation (34) pour un écoulement d'un fluide à l'intérieur dudit corps de guidage (31), de manière à éliminer toute matière perturbatrice ou poussière présente à l'intérieur.

10. Appareil selon l'une quelconque des revendications 6 à 9, **caractérisé en ce qu'**il comprend un autre ensemble de guidage (7a) agencé en aval dudit ensemble de détection (3), pour guider dans une autre partie correspondante, par serrage, ledit élément (2) acheminé le long de ladite ligne d'alimentation dans ladite direction d'alimentation (A), éliminant ainsi les déformations et/ou les déviations imposées audit élément (2) par des ensembles de redressement ou de correction, ledit ensemble de guidage (7) étant agencé en amont de ladite unité de détection (3).

11. Appareil selon la revendication 10, **caractérisé en ce qu'**il comprend ledit ensemble de coupe (6), ledit autre ensemble de guidage (7') étant interposé entre ledit ensemble de détection (3) et ledit ensemble de coupe (6).

12. Appareil selon l'une quelconque des revendications 6 à 11, **caractérisé en ce que** ledit ensemble de détection (3) comprend au moins un dispositif de capteur (30) de type magnétorésistif.

13. Appareil selon l'une quelconque des revendications 6 à 12, **caractérisé en ce que** ledit ensemble de détection (3) comprend une pluralité desdits dispositifs de capteur (30) agencés successivement le long de ladite ligne d'alimentation selon ladite direction d'alimentation (A).
